Europäisches Patentamt

European Patent Office

Office européen des brevets

(19)

(11) Publication number: 0 384 493 A2

# EUROPEAN PATENT APPLICATION

(12)

(21) Application number: 90106715.7

(22) Date of filing: 21.10.86

(51) Int. Cl.5: G03G 15/00, G03G 15/01, G03G 15/02

This application was filed on 07 - 04 - 1990 as a divisional application to the application mentioned under INID code 60.

(30) Priority: 25.10.85 US 791218

(43) Date of publication of application:
29.08.90 Bulletin 90/35

(60) Publication number of the earlier application in accordance with Art.76 EPC: 0 220 663

(84) Designated Contracting States:
DE FR GB IT

(71) Applicant: Colorocs Corporation
2830 Peterson Place
Norcross Georgia 30071(US)

(72) Inventor: Palm, Charles S.
2830 Peterson Place
Norcross, Georgia 30071(US)
Inventor: Slayton, Danny Lee
4587 Towncrier Road
Lilburn, Georgia 30247(US)
Inventor: Sampson, Peter Francis
3929 Valley Bluff Road, No. 186
Doraville, Georgia 30340(US)
Inventor: Davis, David R.
5677 Pinedale Circle
Buford, Georgia 30518(US)
Inventor: Wheatley, Maurice S., Jr.
3342 Canary Trail
Duluth, Georgia 30136(US)
Inventor: Chatham, Gregory Alan
875 Franklin Road, Apt. 838
Marietta, Georgia 30067(US)
Inventor: Jones, Wayne Curtis
3667 Centennial Trail
Duluth, Georgia 30136(US)
Inventor: Charles, Kirk William
1000 Collier Road, Apt. A-4
Atlanta, Georgia 30318(US)
Inventor: Ireland, Anthony J.
7021 Gladys Avenue
El Cerrito, California 94530(US)
Inventor: Lak, Khosrow
3549 E. Old Chamblee Tucker Road
Doraville, Georgia 30340(US)

(74) Representative: Patentanwälte Dr. Solf & Zapf
Zeppelinstrasse 53
D-8000 München 80(DE)

(54) Improved print engine for color electrophotography.

(57) The invention covers an electrophotographic system for color electrophotography, using a flexible receptor belt (38) to carry photosensitive electrostatic images, and a transfer belt (39) for building up composite developed images. Improved copy quality monitoring by sensing actual amounts of toner deposited on the photoreceptor belt (38) is disclosed. For this a plurality of electrostatic test images (228) is provided on the photosensitive receptor (38), each test image corresponding to a particular one of a plurality of predetermined color components. The developed test images (228) are measured by illuminating and measuring the light (230) reflected from the test images (228). By means of output signals (241) thus gained the corona voltage is controlled.

FIG 2

**FIG 4**

FROM FIG 12 ▶

227

226

229

231

230

228

38

232

235

236
HPF

237

238
RECTIFIER

239

240
LPF

241

TO MUX 374
FIG 12

1a

## IMPROVED PRINT ENGINE FOR COLOR ELECTROPHOTOGRAPHY

### Technical Field

The present invention relates generally to print engines for color electrophotography and, in particular, to an electrophotographic system according to the precharacterizing part of claim 1.

### Background of the Invention

Electrophotography has become one of the most widely used systems in the field of information processing in this century. In particular, dry copying, also known as xerography, has become a standard process for creating copies of documents in a host of environments including offices, educational institutions and the like. The basics of xerography are well known to those skilled in the art.

The fundamental elements of a xerographic copier include a photosensitive medium which is charged with an electrostatic charge of predetermined polarity. An optical image of an original to be copied is focused onto the electrostatic medium, either at one time through the use of a stroboscopic flash and appropriate optics, or by a linear scan which moves either the light source, optical elements in the optical path, or both, in synchronism to scan the photosensitive medium with the image of the original.

Portions of the originally uniform electrostatic charge on the surface of the photoreceptor are conducted away from the areas of the photoreceptor which were illuminated, and thus an electrostatic image of the original is left on the photoreceptor. In most modern xerographic copying systems, this image is passed over a source of toner materials electrostatically held to ferromagnetic carriers. The ferromagnetic carriers are used to allow magnetic fields to bring the materials into contact with the above-mentioned electrostatic image.

The electrostatic charge which remains on portions of the electrostatic image has a sufficiently strong electrostatic force to pull the toner materials away from the carriers and to hold them in place on the appropriate portions of the electrostatic image. The magnetic forces associated with the toner modules carry the ferromagnetic carrier particles back to a position where they are remixed with additional toner.

As is known to those skilled in the art, the toner materials are normally plastics which melts at a predetermined temperature and have appropriate color characteristics once they are melted.

The charged photoreceptor which now carries toner on the portion of the photoreceptor which was not discharged in response to light when the electrostatic image was originally created, is referred to herein as a developed image. Subsequently, the photoreceptor carrying the developed image is brought into contact with an image receptor which, in the most common applications of xerography, is a sheet of paper. Electrostatic charging techniques are used to transfer the toner from the photoreceptor to the image receptor.

Once this is accomplished, the image receptor is passed through a device, commonly referred to as a fuser, which is a station in the path for the image receptor at which the transferred toner is heated to fix the image onto the image receptor. By this process, a monochrome copy of the original image which was exposed onto the surface of the photoreceptor is made.

In more recent years, systems for color electrophotography have been created. In many respects, the process of color electrophotography is analogous to standard three-color printing processes used in the more conventional printing arts. Conventional three-colour printing color component images, commonly referred to as color separations, are created by photographing the original through appropriate filters. Each of the separations is in turn made into a separate printing plate. During the printing process, each plate is inked with an appropriate color determined by the filter used in making the original separation. The printing press can be adjusted so that proper registration, aligning each separate color component image over the other is accomplished. Once the press is properly adjusted, multiple copies of the original color image may be faithfully reproduced.

Prior art color electrophotography machines have used a conceptually similar process. Most full color dry copiers use three process colors to recreate (within the color limits of available toner materials) any color in the spectrum. Three color component images are shot through three separate filters in a manner analogous to the creation of color separations in color printing. Each image is developed with a toner having the appropriate color characteristics, and each developed color component image is in turn transferred to the image receptor or paper, one on top of the other, to provide a composite image. The paper carrying the composite image is then passed through a fuser in a conventional manner.

The object of the present invention is to provide an improved print quality monitoring apparatus for color electrophotographic print engine which compensates for environmental parameters such as temperature and humidity by developing image segments of standardized color reference images shot through the machine's filter, and passively monitoring, by use of detection of scattered light, the actual level of toner deposited, and making appropriate adjustments in corona voltages in response to the measured depth of toner deposition.

Summary of the Present Invention

The present invention overcomes the above stated technical problems in the prior art in a number of significant aspects by the features of the characterizing part of claim 1. Claim 2 contains advantageous further developments of the invention.

The present invention is an improved copy quality monitoring system. As is known to those skilled in the art, a number of environmental variables affect the operation of electrophotographic print engines, particularly humidity and temperature. In the presence of a relatively high humidity, the air includes a lot of hydrated ion carriers which can have the effect of discharging the electrostatic potential applied to the photoreceptor belt. This in turn affects the amount of toner transferred to the photoreceptor during the development process. Similar effects will be observed in the transfer from the photoreceptor belt to the intermediate transfer belt.

The print quality monitoring system of the present invention includes two major subsystems: an electrostatic monitoring and toner deposition monitoring. The first element of the system is provision of a reference standard for creating a reference image segment on the photoreceptor belt. In embodiments of the present invention used in photocopiers, a set of standard color component bars is provided slightly to one side of the platen glass for holding originals to be copied, and on the interior of the machine. These are aligned within the optical path of the optics of the system so that when a scan of an original is made to create an electrostatic image on the photoreceptor belt, the color bars may also be selectively scanned to form an image on the belt. A non-contact electrostatic volt meter is disposed over the photoreceptor belt. The controller for the present invention keeps track of movement of the portion of the belt carrying the image of the color reference bar. When the image of this bar passes under the non-contact electro static volt meter, a reading of the volt meter is made.

The electrostatic voltage which should be on this portion of the belt is a known calibration quantity. If the electrostatic volt meter detects a voltage on this portion of the belt which is outside an acceptable range, a processor within the controller addresses a look-up table and determines an appropriate change to be made in the input voltage to the corona charging the photoreceptor belt. In this matter, environmental effects which may alter the electrostatic characteristics of the photoreceptor belt are offset.

The second subsystem of the print quality control apparatus is a system for monitoring the depth of toner deposition. When print quality monotoring is taking place, the controller again tracks movement of the portion of the photoreceptor belt carrying the electrostatic image. This image is developed as the belt passes the active toner station (which carries the color of toner corresponding to the color of the color reference bar used in creating the image) and is developed in a normal manner. The developed reference image then passes over an optical scanner, the output of which is read as the developed reference image passes it.

The optical scanner of the preferred embodiment uses an infrared light-emitting diode in conjunction with a phototransistor for detecting light from the LED which is reflected back from an adjacent surface, in this case, the photoreceptor belt carrying the toner of the developed reference image. A standard table is provided in read only memory which correlates the voltage at the output of the optical detector with the proper amount of toner of the particular process color of the referenced image which should be present to properly develop the reference image. Again, if inadequate toner is detected, either the corona voltage may be adjusted or it may be an indication that the supply of toner is low or not operating properly.

The preferred form of the toner deposition detector in the present invention modulates the LED at a particular predetermined frequency and filters and rectifies the output of the optical detector in order to offset the effects of ambient temperature on the infrared photodetector to assure that the optical detector is accurately reading lnly lightr refelected from the light-emitting diode.

A similar arrangement for detecting toner deposition on the intermediate transfer belt is used to test for the percent of toner transferred from the photoreceptor to the intermediate transfer belt. If the percentage of transfer changes, alterations to the surface charge of the transfer belt may be made to improve the transfer characteristics.

That the present invention satisfies the object and overcomes the drawbacks of the present invention will be appreciated from the detailed description of the preferred embodiment below.

Brief Description of the Drawings

Fig. 1 is a block diagram of the preferred embodiment of the present invention.

Fig. 2 is an elevational diagram of major components of the image development system of a first preferred embodiment.

Fig. 3 is a plan view of the lower side of the platen of the preferred embodiment showing color reference bars.

Fig. 4 is a partially schematic, partially block diagram of the toner deposition sensor of the preferred embodiment.

Fig. 5 is a block diagram of the overall electrical control apparatus for the preferred embodiment.

Detailed Description

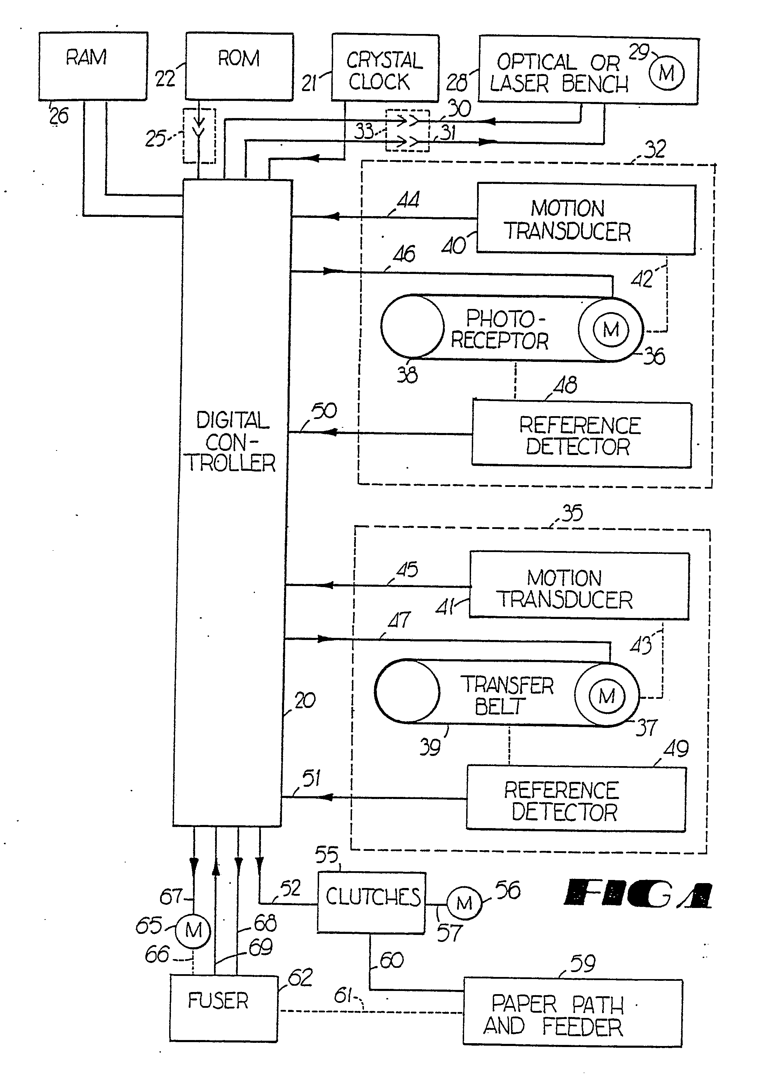

Turning now to the various drawing figures, in which like numerals reference like parts, a detailed description of the preferred embodiment will be provided. A block diagram of the basic architecture of the present invention is shown in Fig. 1. The entire machine is operated under the control of a digital controller 20 which will be described in greater detail hereinbelow. Controller 20 includes a master timing source derived from a 12 megahertz crystal clock 21. Controller 20 includes a microprocessor having instructions located in read only memory 22. Read only memory 22 is shown as connected by a plug connector 25 to indicate that ROMs embodying ROM 22 can be selectively replaced depending on the particular configuration of an embodiment of the present invention. Also random access memory 26 is connected to controller 20 for storing various values and states, described in greater detail hereinbelow.

The source of images for the present invention is shown by block 28 marked optical or laser bench. This is to indicate that the light signal source for input to the present invention is selectively replaceable and can include an optical bench in the case of the preferred embodiment performing as a copying machine, or a laser bench in the case of embodiments instructed as laser printers. In the preferred copier embodiment, a motor 29 is included to drive an optical scanner. Two-way data communication takes place between controller 20 and bench 28 via lines 30 and 31.

Two main subsystems of the preferred embodiment as the photoreceptor belt subsystem 32 and transfer belt subsystem 35. Each of these subsystems includes conceptually similar components. Each subsystem is driven by a motor, 36 and 37, respectively. Motor 36 drives photoreceptor belt 38 and motor 37 drives transfer belt 39. Motion transducer 40 responds to movement of motor 36 as indicated by dashed line 42. Similarly, motion transducer 41 responds to motor 37 as indicated by dashed line 43.

In the preferred embodiment, these devices include light choppers which will be described in greater detail hereinbelow. Motion transducers 40 and 41 provide output on lines 44 and 45, respectively, to controller 20. Controller 20 provides pulse width modulated input signal to control the speeds of motors 36 and 37 on lines 46 and 47, respectively.

Reference detectors 48 and 49 determine the passage of predetermined reference points past a sensor and are used together with precise timing signals derived from crystal clock 21 to control movement of belts 38 and 39 to achieve proper registration, as discussed above in connection with the summary of the invention. Outputs from reference detectors 48 and 49 are provided to controller 20 on lines 50 and 51, respectively.

The paper drive and paper path in the present invention is also controlled from digital controller 20. Line 52 represents a plurality of control signals to a plurality of clutches 55 which are mechanically linked to a motor 56 as shown by line 57. Clutches 55 activate conventional paper picking and movement functions represented by block 59 and line 60.

As described hereinabove, there is a space represented by dashed line 61, within the paper path between the output of the point at which a complete image is transferred to a sheet of paper, and the input of fuser 62. This spacing is suggested by dashed line 61.

Fuser 62 is driven by a motor 65 as indicated by dashed line 66. Motor 65 is also controlled by digital controller 20 through signals provided on line 67. Control signals to the fuser are provided from controller 20 on line 68 and information on the status of the fuser, primarily temperature and operating speed, are returned to digital controller 20 on line 69.

As will be apparent to those skilled in the art, Fig. 1 represents the control architecture of the print engine of the present invention. An important aspect of the architecture of the print engine of the present invention may be readily appreciated from viewing Fig. 1. Subsystems 32 and 35 are two substantially identical subsystems for driving the belts used in the present invention to create images. Each subsystem provides precise digital timing signals about the motion of its associated belt to digital controller 20. Also, motors 36 and 37 driving each respective subsystem are driven at speeds controlled by digital controller 20, preferably through the use of pulse width modulated signals. Information about the present position of predetermined points on the belts are provided to controller 20 by reference detectors 48 and 49.

These signals are used, in connection with precise timing signals derived from crystal clock 21, to determine the lengths of belts 38 and 39 as well as their present position at any given point in time. Therefore, as pointed out in the summary of the invention, belts 38 and 39 can be, and in practical embodiments of the present invention are, of a nominal length plus or minus a given intolerance for which digital controller 20 can compensate. An important aspect of this given tolerance is that it is much greater than allowable tolerances in prior art mechanically linked color electrophotographic print engines.

In the preferred embodiment, controller 20 uses the motion of photoreceptor belt 38 as a master reference and adjusts operation of the other subsystems of the preferred embodiment to be properly synchronized with the motion of the photoreceptor belt.

Another aspect of the preferred embodiment represented by Fig. 1 is the fact that the non-critical mechanical motion functions such as picking and feeding of paper are under the control of a common motor 56 and a plurality of clutches 55, all of which are mechanically linked in a manner similar to how such components operate in prior art machines. The significant aspect of this arrangement is that the non-critical mechanical movement elements are operated by a single motor and a plurality of clutches, whereas the critical elements for registration; movement of photoreceptor belt 38 and transfer belt, 39 are made under precise control of digital controller 20.

Furthermore, fuser 62 is driven by an independent motor, 65. As noted hereinabove, this allows a sheet of image receptor, preferably paper or plastic transparency material, to be driven through the fuser at a slower rate than images are transferred between belts 38 and 39 during color electrophotography. This is because the fuser must operate on only one composite image, for every three images created on photoreceptor belt and transferred to transfer belt 39. This independent operation allows the dwell time in the fuser to be increased without slowing down the copying rate of the machine or unduly increasing the fuser temperature. This arrangement also allows fuser motor 65 to be driven at substantially the machine speed of belts 38 and 39 when the copier is operating in a monochrome mode.

The replaceability of bench 28 is further suggested by the block representation of plug connector 33. In this connection it should be understood that while the significance of signals on lines 30 and 31 will vary depending on whether a laser or optical bench is mounted over the print engine of the present invention, controller 20 is designed so that an adequate nunmber of digital interface lines are provided to embody lines 30 and 31 so that either type of light source may be used.

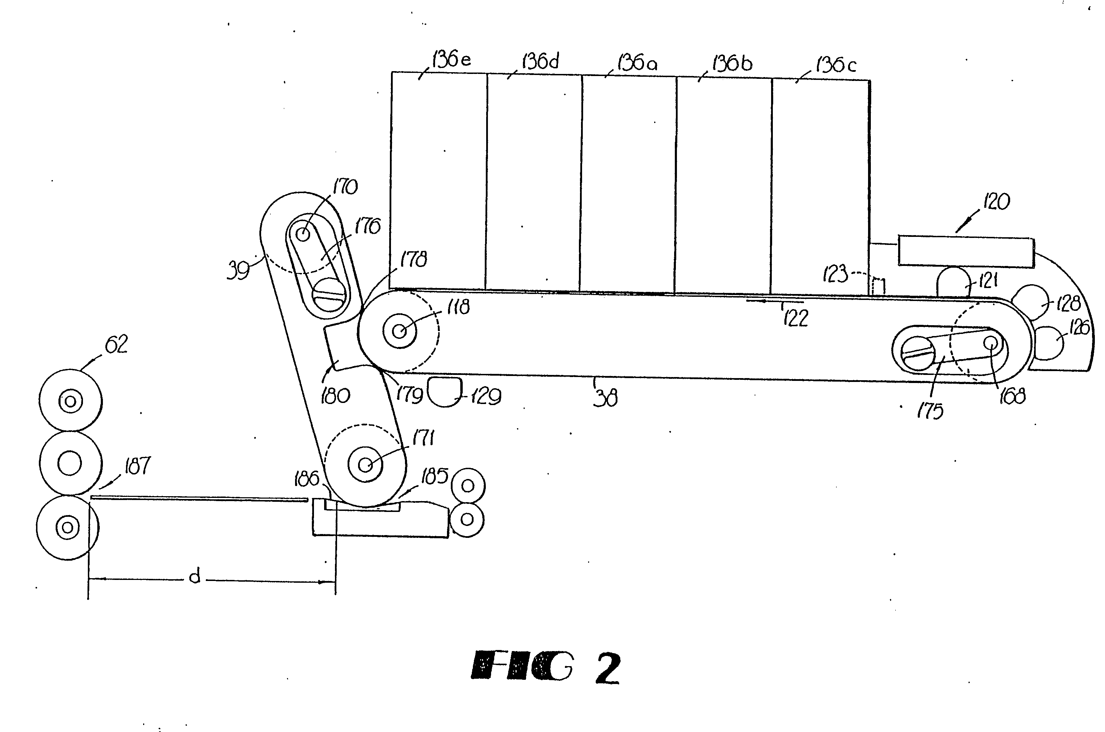

Turning next to Fig. 2, a detail drawing of a preferred embodiment of a portion of the image development subassembly is shown. Each of belts 38 and 39 is mounted about a pair of rollers on pivot points 118 and 168 for belt 38 and 170 and 171 for belt 39. Associated with the mechanical elements carrying these belts are tension adjusting cams 175 and 176. These cams are loosened when belts 38 and 39 are to be removed, and are used to properly tension the belts after installation.

A plurality of coronas 121, 126 and 128 are located at expose station 120. Coronas 126 and 128 are sensitizing coronas used to charge belt 38 prior to creation of an electrostatic image. Corona 121 is a discharging scoratron. On the lower side of photoreceptor belt 38, an AC corona 129 is located. This corona is excited with an alternating current voltage which tends to disperse charge remaining on the belt and thus loosen any residual toner particles which may be left on the belt after transfer of the developed image to transfer belt 38. The particles can therefore be cleaned by a scraper blade (not shown) over a cleaning station.

Also shown in a phantom at expose station 120 is an electrostatic voltmeter used in the copy quality monitor of the preferred embodiment.

As photoreceptor belt 38 moves past expose station 120, light from an optics bench is focused onto the belt in synchronism with its movement to provide an electrostatic image on the photoreceptor belt. Assume for the moment that color copying is taking place. Toner modules 136a - 136c contain the three color process toners. When the first image is developed, an appropriate separation filter (not shown) is interposed between a light source and the optics bench and expose station 120 in a known manner. As belt 38 moves past expose station 120 in the direction shown by arrow 22, an electrostatic image of this particular color component is created on belt 38 in a manner which will be familiar to those skilled in the art, and which was described in the background of the invention.

Assume that the first color developed corresponds to the color contained in toner modules 136a. As a developed image moves past toner module 136a, the module is activated to deposit toner materials on the charged portions of the surface of belt 38 to provide a developed image of this color component of the original. As belt 38 continues to rotate, the leading edge of the developed image eventually reaches point 178 at which belt 38 first makes contact with belt 39. The developed image is transferred from belt 38 to belt 39 as the belts continue to rotate and the image passes from point 178 to point 179.

It should be noted in Fig. 2, belt 38 is urged firmly against belt 39 and an open space 180 is provided behind portion of belt 38 which contacts belt 38. This provides a contact area between points 178 and 179 which is referred to herein as the wrap of the belts. In the preferred embodiment, the length, along the direction of travel of belt 38, of the wrap area between points 178 and 179 is approximately 0.6 inch. It is believed preferable to have this area be at least 1/2 inch in length.

Two mechanisms resulting from the wrap area of the belts aid in transfer of the image and maintenance of proper registration. First, a considerable mechanical force is provided in the wrap area simply from the force of having belt 38 urged strongly into belt 39, as shown. Secondly, belt 39 is charged to a high positive potential by corona (not shown) so that it has approximately one kilovolt of electrostatic potential as a result of positive surface charge. This surface charge causes the toner material on belt 38 to be transferred to the belt 39, thus transferring the developed image, and furthermore creates extremely strong electrostatic forces between belts 38 and 39.

Considering a one kilovolt surface charge potential on belt 38, and the intimate contact between the belts in the wrap area between points 178 and 179, it will be quickly appreciated that a very intense electric field strength exists in the wrap area. This helps hold the belts tightly together and prevents any slip from occurring as composite images are laid one over the other. Indeed, a prototype of the present invention has been operated with the above-recited charge conditions on the belts with the motor driving transfer belt 39 turned off, and the electrostatic forces between the two belts were sufficient to cause continued rotation of belt 39 and to overcome the mechanical friction and inertia of the components attached thereto.

Once approximately half of belt 38 has passed expose station 120 after development of a first composite image, the second separation filter is inserted in the optical path in optics bench 28, and an electrostatic image of a second color component of the original is exposed on photoreceptor belt 38. Toner module 136b is activated as this electrostatic image passes under it in order to provide a second color component developed image. This image is likewise transferred to belt 38 as a third color component image is being developed.

It should be noted that belt 38 is of sufficient length so that, for conventional 8-1/2 x 11 copies, the second electrostatic image is being developed on one portion of the belt as the first developed image is being transferred to belt 39. Therefore, one and one-half revolutions of belt 38 are required to create, develop and transfer a three-color composite developed image during three rotations of transfer belt 39.

It should be noted in connection with Fig. 2, that one unique aspect of the architecture of the preferred embodiment is that all of toner modules 136 are downward facing and gravity fed. The conventional wisdom of those skilled in the art of color copying indicated that downward feeding gravity driven toner modules would not be usable in a color copying machine because of the fear that excess toner would fall out onto the belt and contaminate the images.

Once a complete composite image has been transferred to photoreceptor belt 39, an image receptor, normally a piece of paper, is provided by a paper handling subassembly to a transfer station at 185. In the preferred embodiment, a flexible web shown as 186 is provided under the roller rotating about pivot point 171 so that the paper is urged against transfer belt 39. Once transfer is complete, the paper then moves through a lateral open space shown by dimension line d in Fig. 2.

Dimension d is chosen such that at least one standard size sheet of paper (8-1/2 x 11 in the preferred embodiment) can occupy space d between the point at which the trailing edge of the sheet of paper last contacts belt 39, and the point at which the paper enters fuser mechanism 62. Therefore, once a composite image has been transferred from transfer belt 39 to the sheet of paper, it is free from any need to have its movements synchronized with transfer belt 39 and can enter the fuser which, in the most preferred embodiment of the present invention, can be operated at a lower speed than the machine speed at which belts 38 and 39 are operating. It should be understood that the concept of machine speed is linear rate of travel of the image carrying and developing elements. Therefore, by spacing the exit from the transfer station at 185 by at least a predetermined distance d from the entrance to fuser 62 shown at 187, the fuser may be, and is, operated at a speed independent of the speed at which transfer belt 39 is moving.

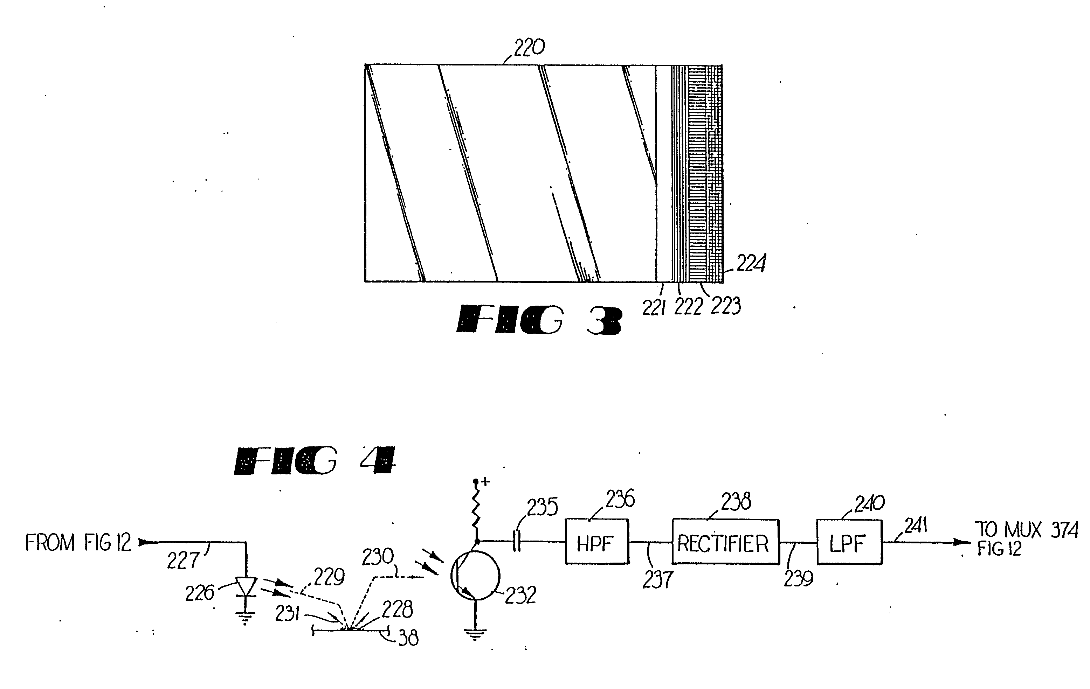

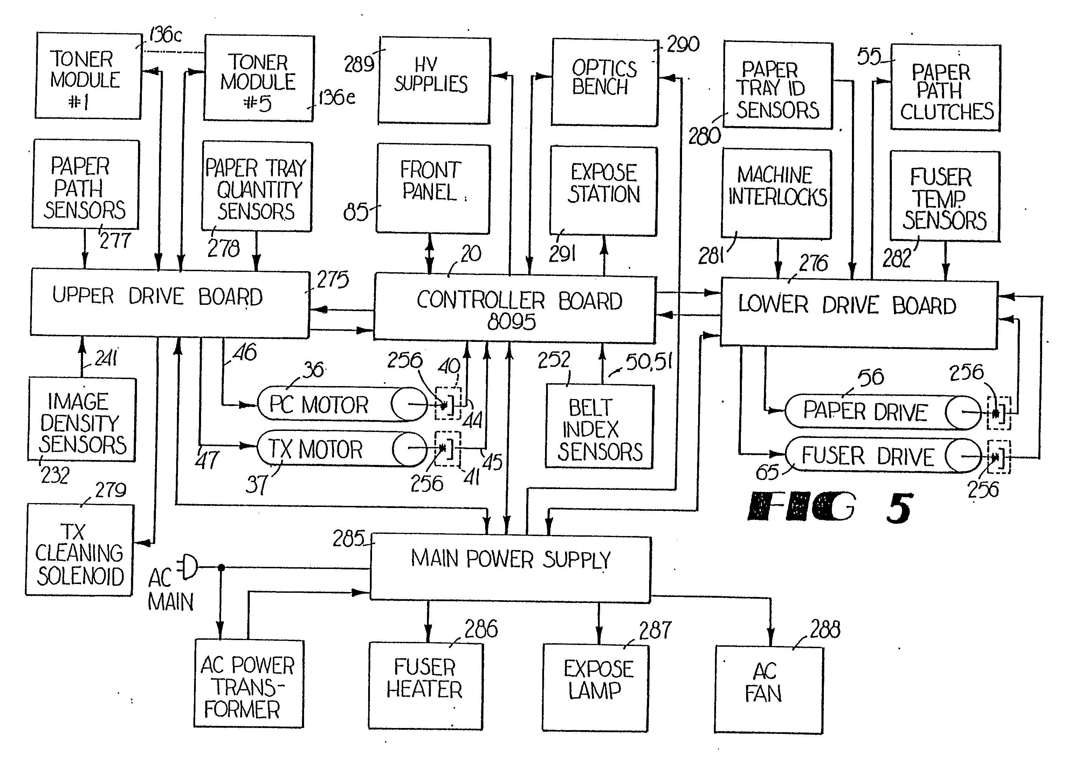

Certain aspects of the novel copy quality monitoring system of the present invention will now be described in connection with Figs. 3 and 4. Fig. 3 shows the glass platen 220 for accepting originals in copy machines embodiments of the present invention. The view of Fig. 3 shows platen 220 as viewed from the interior of the machine. As will be apparent to those familiar with copying machines, platen 220 lies under a cover (not shown).

On the right-hand end of platen 220 are four reference color bars 221 - 224. These bars are, respectively, white, magenta, cyan, and yellow. In Fig. 3, bar 222 has been lined for red and bar 223 has been lined for blue to indicate magenta and cyan, and bar 224 is lined for yellow. These four color bars constitute a reference means for providing a plurality of electrostatic test images on the photoreceptor belt 39. When the copying machine is to be calibrated to test for copy quality, the optical system of optics bench 28 is configured to focus images of reference bars 221 - 224 onto the photoreceptor belt as an image is shot through each of the successive separation filters in the optical system. The digital controller of the preferred embodiment, described in greater detail hereinbelow, keeps track of where each of the images of reference bars 221 - 224 is located as each image is shot.

First, a non-contact electrostatic volt meter is positioned over photoreceptor belt 38 at 123 (Fig. 2). When digital controller 20 (Fig. 1) detects that the position on photoreceptor belt 38 bearing the image of one of the color bars is passing under the electrostatic volt meter, a reading of the voltage is made. Note that, for each successive filter used to create such an image, a reference bar on an electrostatic image should exist from the contribution of white bar 221 as well as the particular one of reference bars 222 through 224 which corresponds to the filter through which the image is shot.

It is believed by the inventors of the present invention that it is known in the art to test the electrostatic voltage on a photoreceptor belt in a copying machine under conditions of no light and intense exposure to white light. However, it is believed that the testing of electrostatic voltages present on electrostatic images created by shooting a reference color standard through the separation filters in a color copying machine is new in the art.

If the measured electrostatic voltage is not within an acceptable range, digital controller 20 goes to a look-up table contained in memory and makes an appropriate adjustment to the input voltages charging the photoreceptor belt coronas (Fig 2). The images are then reshot until digital controller 20 detects an acceptable output voltage level from the electrostatic volt meter.

In addition to electrostatic measurement of electrostatic images created in response to reference color bars 221--224, the preferred embodiment additionally develops these images, and tests for adequate toner deposition for each component color. First, it should be noted that this arrangement allows digital controller 20 to detect defects in operation of toner modules 136 even when the corona voltages used on the belts are appropriate for the current ambient conditions of humidity.

When executing this test, each electrostatic image of a reference color bar passes under the appropriate one of toner modules 136 (Fig. 2) and is developed in the normal fashion. As each reference image is developed, it passes under an optodetector station illustrated in Fig. 4, which is a partially block and partially schematic diagram of the optical detector used in sensing toner deposition in the preferred embodiment. An LED 226 is driven by a 15 kilohertz signal on line 227 which is provided from digital controller 20. LED 226 is placed over photoreceptor belt 38 and is excited by the signal on line 227 when the developed reference image including toner shown as 228, passes under the LED. Light from LED 226 is indicated by dashed line 229 as striking toner 228, and some of this light is reflected, as indicated by dashed line 230. However, because of the particulate nature of toner 228, significant amounts of the light 229 illuminating toner 228 are scattered as indicated by arrows 231 in Fig. 4. The unscattered light represented by line 230 illuminates the base of a phototransistor 232.

As will be apparent to those skilled in the art, modular circuits including photodiode 226 and phototransistor 232, together with appropriate focusing optics, are commonly available and are what are used in the preferred embodiment to embody the corresponding elements shown in Fig. 4. Thus, it will be appreciated that these devices are arranged to physically be directly over photoreceptor belt 38 to both illuminate the belt and to detect reflected light therefrom.

Phototransistor 232 is arranged in a simple common emitter configuration taking output at its collector, which is coupled through a capacitor 235 to a high pass filters 236. Capacitor 235 prevents any DC component from the collector current of transistor 232 from reaching the input of high pass filter 236. Filter 236 removes any 60 and 120 cycle noise from the signal which appears at its output on line 237. From line 237, the signal is rectified by full-wave rectifier shown as 238. A pulsed unipolar output signal is provided on line 239 which is passed to the input of a low pass filter 240.

By proper selection of the filter order and cutoff frequencies for filters 236 and 240, which is well within the ordinary level of skill in the art, a DC signal is provided on line 241 which has a magnitude that is proportional only to the 15 kilohertz component of the input signal to the base of transistor 232. The DC voltage level on line 241 is provided to an analog multiplexer which forms a part of digital controller 20.

In the preferred embodiment of the optical detector of the present invention, LED 26 produces, and transistor 232 responds to, infrared light. The thickness of the deposited toner 228 on belt 38 is detected primarily by measuring the scattering phenomena represented by lines 231. Up to a certain minimum acceptable toner thickness, the more toner present under LED 226, the more the infrared radiation will be scattered. Therefore, the lower the level of infrared radiation illuminating the base of transistor 232, the greater the amount of toner deposited. This is because photoreceptor belt 38 is a very smooth surface of relatively high reflectivity. Thus, if the toner is too thinly deposited, or absent altogether at certain locations under LED 226, a very large percentage of the emitted infrared radiation from the diode will strike the base of the transistor.

There are two significant advantages to the arrangement of Fig. 4 described hereinabove. The selection of infrared wavelengths for the radiation used to detect toner deposition provides a condition in which the reflected radiation is substantially insensitive to the color of toner materials 228. Thus, there is a direct correlation between the 15 kilohertz component of the input signal to the base of transistor 232 and the thickness of toner 228, substantially independent of the toner's color.

However, the use of an infrared photodetector 232 has a potential of rendering the optical detector sensitive to variations in ambient temperature within the machine. Therefore, the use of the 15 kilohertz signal to excite LED 226, and the 15 kilohertz detector circuitry shown on the right-hand side of Fig. 4, removes any effects of ambient temperature from the infrared measurement. It should be understood that while use of infrared radiation is preferred, it is also possible to construct embodiments of the toner deposition detector of Fig. 4 using radiation having frequencies of visible light. Thus, as used in this specification and the appended claims, reference to a light source embodied by LED 226 will be understood to include radiation within the visible light spectrum as well as radiation in adjacent spectra, including the infrared.

In addition to use of the optodetector of Fig.4 over belt 38, an identical detector is also provided over belt 39. This detector is used to test the quantity of toner transferred from belt 38 to belt 39 when conducting print quality tests using developed images of reference bars 221 - 224 (Fig. 3). Appropriate adjustments to the charged state of belt 39 are made by the digital controller in response to the measured amounts of toner on the developed reference images which are transferred to belt 39.

The digital electronic controller of the preferred embodiment will now be described in connection with Fig. 5 showing a block diagram of the overall electronic controller of the preferred embodiment. The entire operation of the copying machine of the disclosed embodiments is controlled by a digital controller board 20 shown in the middle of Fig. 5. Digital controller 20 is in two-way communication with each of the other control boards, upper driver board 275 and lower driver board 276. Upper driver board 275 provides drive to the solenoids in toner modules 136. A plurality of conventional paper path and paper tray quantity sensors are shown as 277 and 278, respectively. Additionally, a transfer belt cleaning solenoid is shown at 279 which selectively moves a blade into and out of contact with transfer belt 39 after a composite image has been transferred to an image receptor.

Lower driver board 276 controls paper path clutches 55. Additionally, this board drives paper drive motor 56 and fuser drive motor 65. A plurality of conventional paper tray identity sensors 280 also communicate with controller 20 through lower driver board 276. Additionally, machine interlocks 281, which detect whether all panel openings and the like are properly closed, communicate through lower driver board 276. Also, a fuser temperature sensor 282 connects through lower driver board 276.

The processor operating digital controller 20 includes a plurality of analog input lines and on-board analog to digital converters. The various analog voltages sensed throughout the electrical system of the preferred embodiment are connected directly (through plug connectors to the various driver boards) to these analog inputs so that the digital controller can respond to these signals.

A substantially conventional main power supply is shown at 285. However, controller board 20 communicates certain signals to main power supply 285 to implement the novel energy management features for the copier of the preferred embodiment. Power supply 285 provides power to fuser heater 286, expose lamps 287, and an AC cooling fan 288, all of which are controlled by triacs.

Controller board 20 also communicates with switches in display on front panel 85 and the high voltage supplies 289 for controlling the input voltages to the various coronas within the copier. Controller 20 also communicates with electromechanical control devices in optics bench 90 to synchronize the optical scan of an original to the movement of photoreceptor belt 38. Lastly, digital controller 20 also controls sensitizing coronas and interdocument control lamps at expose station 291 and receives the output from electrostatic voltmeter 123 (Fig. 2).

The architecture of the overall electronic control of the present invention is designed to distribute the work to be done by various electrical components in a manner which allows all of the necessary work done by high-speed digital controller 20 to be accomplished in real time, and to distribute other tasks which are less time critical to boards 275 and 276. Once the basic structure of digital controller 20 is described, implementation of the other control functions present on boards 275 and 276 will be apparent to those skilled in the art in light of the explanations contained in the specification of how these functions interact with the controller. Additionally, a significant number of the control functions shown on Fig. 5 are conventional in the art of electrophotographic copiers and laser printers.

From the foregoing description of the preferred embodiment, and several alternative embodiments, it will be appreciated that the present invention overcomes the drawbacks of the prior art and meets the objects of the invention cited hereinabove. In view of the teachings of this specification, other alternative embodiments will suggest themselves to those skilled in the art and therefore the scope of the present invention is to be limited only by the claims below.

## Claims

1. Electrophotographic system of the type including means (28) for selectively focusing light onto a photosensitive receptor carried on a first rotating surface (38); means for sequentially creating a plurality of electrostatic images on said photosensitive receptor in response to said light, each of said images corresponding to a particular one of a plurality of predetermined color components; a selectively operable corona (126, 128) for providing an electrostatic charge on said photosensitive receptor in response to a corona input voltage; drive means (36) for causing said first rotating surface to rotate; means for developing each of said plurality of images with a particular one of a plurality of toners (136), each of said plurality of toners corresponding to each respective particular color component, to sequentially provide a plurality of developed images on said photosensitive receptor; means for sequentially transferring said plurality of developed images to a transfer medium (39) carried on a second rotating surface in contact with said first rotating surface to provide a composite developed image on said transfer medium; means (55, 56, 59) for transferring said composite developed image to an image receptor (186); fuser means (62) for fixing said developed image onto said image receptor as said image receptor passes through said fuser means; wherein said improved print quality monitoring system **is characterized by:**
reference means (222, 223, 224) for providing a plurality of electrostatic test images (228) on said photosensitive receptor, each of said electrostatic test images corre sponding to a particular one of said plurality of predetermined color components and being at a respective predetermined location on said first rotating surface and for providing a developed electrostatic test image in response to each said electrostatic test image using a respective one of said plurality of toners;
optical detector means including a selectively operable source of light (226) and a photoreceptor (232) disposed near said first rotating surface for, respectively, illuminating a predetermined portion of said first rotating surface and measuring light reflected from said first rotating surface, and for providing an output signal (241) in response to said light reflected from said first rotating surface;
control means (70) connected to said drive means, said optical detector means and said corona for detecting passage of each said respective predetermined location on said first rotating surface by said optical detector means and for controlling said corona input voltage in response to each said output signal produced in response to each respective said developed electrostatic test image.

2. Electrophotographic system as recited in Claim 1, wherein:
said source of light is a light emitting diode (226) driven by a current of a predetermined frequency and said photoreceptor includes filter (236) and rectifier (238) means for causing said output signal to be a DC signal proportional to said light reflected from said first rotating surface having its intensity varying at said predetermined frequency.

RAM 26

ROM 22

21 CRYSTAL CLOCK

28 OPTICAL OR LASER BENCH 29 M

25 30 33 31 32

DIGITAL CON-TROLLER

44 MOTION TRANSDUCER 40

46 42 PHOTO-RECEPTOR M 36 38

48 REFERENCE DETECTOR 50

35 45 MOTION TRANSDUCER 41

47 43 TRANSFER BELT M 37 39

20 49 REFERENCE DETECTOR 51

67 65 M 66 68 69 52 55 CLUTCHES 56 M 57

FUSER 62 61 60 59 PAPER PATH AND FEEDER

FIG. 1

FIG 2

**FIG 3**

220

224

221 222 223

**FIG 4**

FROM FIG 12

227
226
229
230
231
228
38
232

235
236 HPF
237
238 RECTIFIER
239
240 LPF
241
TO MUX 374 FIG 12

**FIG 5**

- PAPER PATH CLUTCHES — 55
- FUSER TEMP. SENSORS — 282
- LOWER DRIVE BOARD
- PAPER DRIVE — 56 — 256
- FUSER DRIVE — 65 — 256
- PAPER TRAY ID SENSORS — 280
- MACHINE INTERLOCKS — 281 — 276
- OPTICS BENCH — 290
- EXPOSE STATION — 291
- CONTROLLER BOARD 8095 — 50,51
- BELT INDEX SENSORS — 252
- AC FAN — 288
- HV SUPPLIES — 289
- FRONT PANEL — 85 — 20
- PC MOTOR — 36 — 40 — 44 — 256
- TX MOTOR — 37 — 41 — 45 — 256 — 46 — 47
- MAIN POWER SUPPLY — 285
- EXPOSE LAMP — 287
- FUSER HEATER — 286
- TONER MODULE #5 — 136e — 136c
- PAPER TRAY QUANTITY SENSORS — 278
- UPPER DRIVE BOARD — 275
- TONER MODULE #1
- PAPER PATH SENSORS — 277 — 241
- IMAGE DENSITY SENSORS — 232
- TX CLEANING SOLENOID — 279
- AC POWER TRANSFORMER
- AC MAIN